# FASCICULE DE BREVET EUROPEEN

(11) **EP 3 680 168 B1**
(45) Date de publication et mention de la délivrance du brevet: **08.11.2023**
(21) Numéro de dépôt: 20159632.7
(22) Date de dépôt: 15.12.2016
(51) Int. Cl.: B64C 11/06, F16C 33/62

(54) **ROULEMENT D'UN PIED DE PÂLE LUBRIFIE**
LAGER FÜR EINEN GESCHMIERTEN SCHAUFELFUSS
LUBRICATED BLADE ROOT BEARING

(30) Priorité: 17.12.2015 FR 1562656
(43) Date de publication de la demande: 15.07.2020
(62) Demande divisionnaire de: 16204444.0
(73) Titulaire: NTN-SNR ROULEMENTS, 74000 Annecy (FR)
(72) Inventeur: BEN ABDELOUNIS, Houcine, 69006 Lyon (FR); GARD, Eric, 69730 Genay (FR)
(74) Mandataire: Alatis

(56) Documents cités:
- EP-A1- 2 749 781
- GB-A- 2 192 943
- JP-A- 2015 224 717
- US-A1- 2003 185 478

## Description

### Domaine de l'invention

L'invention concerne le domaine des roulements d'un pied de pale, en particulier des roulements d'un pied de pale comprenant un revêtement en composé chimique à structure lamellaire et un lubrifiant.

### Contexte de l'invention

Un roulement standard comprend une bague intérieure fixée sur un arbre, et une bague extérieure, concentrique, entre lesquelles est formé un chemin de roulement. Des corps roulants sont disposés dans ce chemin de roulement. Classiquement la bague extérieure est fixe et la bague intérieure tourne, le montage opposé étant possible. Les corps roulants ont un contact très faible avec les bagues intérieure et extérieure pour frotter le moins possible et limiter l'échauffement.

Comme décrit dans la demande EP2749781, le roulement comprend également un lubrifiant, généralement une graisse ou une huile. La lubrification est un élément essentiel pour le bon fonctionnement du roulement. 70% des avaries des roulements sont dues à des problèmes de lubrification. La lubrification a pour objectif d'interposer un film de lubrifiant (dit film d'huile) entre les corps roulants et le chemin de roulement, afin de limiter, le contact métal-métal, l'échauffement, l'usure et le grippage des éléments en contact. Le lubrifiant peut également assurer une protection contre l'oxydation et la pollution extérieure.

Le roulement d'un pied de pale est un des différents roulements existants utilisés dans le domaine de l'aéronautique. Les demandes FR2862609 et FR2817233 décrivent un tel roulement.

Ce roulement sert à orienter les pales d'un moteur à hélice, en fonction de la phase de vol (décollage, croisière, atterrissage, ...). Il est positionné de façon excentrée par rapport à l'axe de rotation du rotor du moteur et tourne constamment autour de l'axe de rotation du rotor. Du fait de cette position excentrée par rapport à l'axe de rotation du rotor, le roulement d'un pied de pale est soumis à une force centrifuge importante et à des efforts appliqués élevés. La force centrifuge et les efforts appliqués élevés vont soumettre le roulement d'un pied de pale à une pression de contact élevée, de l'ordre de 3 GPa.

La pale, quant à elle, s'oriente lentement autour de son axe longitudinal sur une plage angulaire faible (-30° ;+90°) par l'intermédiaire de la bague intérieure et de la bague extérieure du roulement. Si le mouvement relatif des deux bagues est limité, les vibrations font osciller en permanence les deux bagues avec de tous petits débattements générant des conditions oscillantes.

Cette pression de contact élevée et les conditions oscillantes ont pour conséquence de chasser le lubrifiant contenu dans le roulement en dehors des zones de contact. De plus les efforts centrifuges appliqués au roulement ont pour conséquence une projection du lubrifiant vers l'extérieur du roulement particulièrement sur la plage haute de fonctionnement en température. Ces projections entraînent une perte de lubrification et conséquemment la détérioration du roulement d'un pied de pale et la diminution de sa durée de vie.

En plus de cette pression de contact élevée et des conditions oscillantes, le roulement d'un pied de pale est soumis à une plage de températures importante pouvant aller de -55°C (température extérieure en altitude) à +170°C (du fait de la localisation proche du moteur). Le roulement d'un pied de pale doit être lubrifié sur cette large plage de températures.

Le roulement doit donc être lubrifié sur une large plage de températures en conditions sévères associant une pression de contact imposée et des conditions oscillantes. Ces conditions sont antinomiques car pour que le roulement soit bien lubrifié, il faut que le lubrifiant soit capable de réalimenter le contact sur toute la plage de fonctionnement en température, sans se figer aux températures minimales ni être expulsé aux températures maximales sous l'effet des efforts centrifuges. Par contre pour résister à la pression de contact et aux efforts centrifuges, le lubrifiant doit être le plus visqueux possible même aux températures élevées rencontrées lors des régimes moteur générant les efforts de centrifugation les plus importants.

De façon surprenante, la Demanderesse a trouvé un système tribologique complexe permettant d'optimiser le fonctionnement d'un roulement d'un pied de pale. Ce système tribologique complexe met en oeuvre un roulement d'un pied de pale comprenant un revêtement en composé chimique à structure lamellaire et un lubrifiant. En effet, la combinaison du revêtement en composé chimique à structure lamellaire et du lubrifiant permet au roulement d'un pied de pale d'être lubrifié malgré la pression de contact élevée et les oscillations, et ce pour la large plage de températures auxquelles il est soumis.

Ainsi, l'invention a pour objet, selon un premier aspect, un roulement d'un pied de pale s'étendant selon une direction longitudinale entre une extrémité proximale et une extrémité distale,
le roulement d'un pied de pale comprenant
- une bague extérieure présentant une surface intérieure et une surface extérieure opposée à la surface intérieure, la surface intérieure de la bague extérieure présentant un chemin de roulement extérieur,
- une bague intérieure présentant une surface intérieure et une surface extérieure opposée à la surface intérieure, la surface extérieure de la bague intérieure présentant un chemin de roulement intérieur,
- un espace intérieur unique étant défini entre la surface intérieure de la bague extérieure et la surface extérieure de la bague intérieure, l'espace intérieur unique s'étendant entre une extrémité proximale où il est fermé par un système d'étanchéité proximal entre la bague extérieure et la bague intérieure et une extrémité distale où il est fermé par un système d'étanchéité distal entre la bague extérieure et la bague intérieure, ledit espace intérieur unique renfermant un lubrifiant,
- une rangée de corps roulants présentant une surface de contact montée dans l'espace intérieur unique, roulants sur les chemins de roulement extérieur et intérieur,
et caractérisé en ce qu'au moins un des chemins de roulement et/ou la surface de contact des corps roulants est (sont) recouvert(s) d'un revêtement en composé chimique à structure lamellaire.

Selon un second aspect, l'invention a également pour objet, une utilisation d'une composition lubrifiante comprenant un lubrifiant et un composé chimique à structure lamellaire pour lubrifier le roulement d'un pied de pale selon le premier aspect.

Selon un troisième aspect, l'invention a pour objet, un procédé de fabrication du roulement d'un pied de pale selon le premier aspect, caractérisé en ce qu'il comprend une étape de dépôt d'un revêtement en composé chimique à structure lamellaire et une étape d'application d'un lubrifiant.

### Description des figures

La figure 1 est un schéma de principe en perspective d'un rotor.
La figure 2 est une vue en coupe d'un exemple de réalisation particulier d'un roulement de pied de pale.
La figure 3 présente deux microscopies des traces d'usure après un test tribologique sur :
   - la surface d'une plaque non recouverte d'un revêtement en WS₂ et lubrifiée (surface S1, en haut), et
   - la surface d'une plaque recouverte d'un revêtement en WS₂ et lubrifiée (surface S2, en bas).

### Description détaillée de l'invention

Selon un premier aspect, la présente invention concerne un roulement d'un pied de pale s'étendant selon une direction longitudinale entre une extrémité proximale et une extrémité distale,
le roulement d'un pied de pale comprenant
- une bague extérieure présentant une surface intérieure et une surface extérieure opposée à la surface intérieure, la surface intérieure de la bague extérieure présentant un chemin de roulement extérieur,
- une bague intérieure présentant une surface intérieure et une surface extérieure opposée à la surface intérieure, la surface extérieure de la bague intérieure présentant un chemin de roulement intérieur,
- un espace intérieur unique étant défini entre la surface intérieure de la bague extérieure et la surface extérieure de la bague intérieure, l'espace intérieur unique s'étendant entre une extrémité proximale où il est fermé par un système d'étanchéité proximal entre la bague extérieure et la bague intérieure et une extrémité distale où il est fermé par un système d'étanchéité distal entre la bague extérieure et la bague intérieure, ledit espace intérieur unique renfermant un lubrifiant,
- une rangée de corps roulants présentant une surface de contact montée dans l'espace intérieur unique, roulants sur les chemins de roulement extérieur et intérieur,
et caractérisé en ce qu'au moins un des chemins de roulement et/ou la surface de contact des corps roulants est (sont) recouvert(s) d'un revêtement en composé chimique à structure lamellaire.

Un composé chimique à structure lamellaire est un composé dont la structure cristalline est constituée de feuillets bidimensionnels (selon les axes x et y) empilés selon la troisième dimension (selon l'axe z). Les liaisons entre les atomes à l'intérieur des feuillets sont fortes, tandis que celles entre les atomes de deux feuillets sont faibles.

Le composé chimique à structure lamellaire est choisi parmi les carbures de fluor, le graphite, MoS₂, WS₂ WSe₂, NB, ZnO, ZnS et SnS, de préférence choisi parmi le graphite, MoS₂ et WS₂, plus préférentiellement encore le composé chimique à structure lamellaire est WS₂.

WS₂ est privilégié car il est chimiquement inerte, il est en particulier compatible avec les solvants, les carburants, les huiles, les bases et les acides. De plus il n'est pas intrinsèquement dur, ainsi, dans le cas où des particules de WS₂ se détacheraient du revêtement en composé chimique à structure lamellaire, ces particules n'entraveraient pas le bon fonctionnement du roulement d'un pied de pale. La différence de force de liaisons entre les atomes confère au composé chimique à structure lamellaire une propriété de lubrification.

De façon avantageuse, cette propriété de lubrification est présente sur une large plage de températures. Par exemple, WS₂ peut lubrifier un roulement de -188°C à +538°C. Le revêtement en composé chimique à structure lamellaire, en particulier en WS₂, permet, avantageusement, de lubrifier le roulement d'un pied de pale, en particulier les corps roulants par rapport au chemin de roulement revêtu, sur l'ensemble de la plage de températures auxquelles le roulement d'un pied de pale est soumis.

Le revêtement solide en WS₂ reste lubrifiant jusqu'à une pression de contact de l'ordre de 3 GPa. Ainsi, un revêtement en composé chimique à structure lamellaire, en particulier en WS₂, permet, avantageusement, de lubrifier le roulement d'un pied de pale, en particulier les corps roulants par rapport au chemin de roulement revêtu, quelle que soit la contrainte à laquelle ledit roulement est soumis lors de l'utilisation pour laquelle il est conçu.

De plus, le revêtement en composé chimique à structure lamellaire adhère fortement à la surface du chemin de roulement sur lequel il est présent. Le revêtement en composé chimique à structure lamellaire ne se détache donc pas malgré la pression de contact élevée et les conditions oscillantes auxquelles le roulement d'un pied de pale est soumis.

Selon un mode de réalisation, l'épaisseur du revêtement est de 0,2 µm à 2 µm, en particulier de 0,5 µm à 1,75 µm, plus particulièrement de 0,8 µm à 1,5 µm.

Selon un mode de réalisation, le lubrifiant est une graisse comprenant une huile de base et un épaississant.

L'huile de base d'une graisse contribue au pouvoir lubrifiant de la graisse, à sa tenue thermique, à sa résistance à la charge et, conséquemment, à sa durée de vie. Une huile synthétique de type ester, polyalphaoléfine, perfluoropolyéther, utilisées seules ou en mélange, conviennent particulièrement comme huile de base pour la graisse du lubrifiant de la présente invention. Ces huiles synthétiques sont celles usuellement utilisées dans le domaine des graisses et connues par l'homme du métier.

L'épaississant confère sa structure à la graisse en fixant l'huile de base, détermine le comportement de la graisse en termes de tenue thermique, de résistance à la charge, à l'eau, sa consistance et ses capacités d'écoulement. Il contribue aussi à former le film de lubrification. En fonction de la graisse utilisée, les épaississants peuvent être de type savonneux ou non savonneux. Les épaississants savonneux utilisés peuvent être des savons métalliques (lithium) ou des savons métalliques complexes (aluminium, lithium, calcium, sodium) et les épaississants non savonneux peuvent être des composés organiques ou non organiques (bentonite, bentone, polyrésine, silice, polyurée etc.). La polyurée, un savon métallique complexe de lithium et un savon métallique complexe de sodium conviennent particulièrement comme épaississant pour la graisse du lubrifiant de la présente invention.

En particulier, la graisse comprend un mélange ester-perfluoropolyéther et polyurée ; des polyalphaoléfines et un savon métallique complexe de lithium ; un mélange ester-polyalphaoléfines et un savon métallique complexe de sodium ; ou une huile synthétique et un savon métallique complexe de lithium. De préférence la graisse comprend un mélange de polyalphaoléfines et de savon métallique complexe de lithium ou un mélange d'huile synthétique et de savon métallique complexe.

La graisse peut également comprendre des additifs tels que des additifs anticorrosion, des additifs pour pression extrême, des antioxydants.

La plage de températures de fonctionnement de la graisse s'échelonne d'une limite inférieure de température à une limite de performance de température supérieure. La limite inférieure de température est la température la plus basse à laquelle la graisse permet au roulement de démarrer sans difficulté. Sous cette limite, la lubrification est insuffisante et peut entraîner des défaillances du roulement. Au-dessus de la limite de performance de température supérieure, la graisse se dégrade de manière incontrôlée et sa durée de vie n'est plus garantie.

La limite inférieure de température de la graisse du lubrifiant selon l'invention peut être de -70°C à -20°C, en particulier de -60°C à -30°C, plus particulièrement de -55°C à -40°C.

La limite de performance de température supérieure de la graisse du lubrifiant selon l'invention peut être supérieure ou égale à 170°C, en particulier de 170°C à 210°C, plus particulièrement de 175°C à200°C.

De façon avantageuse, ces plages de température permettent au lubrifiant de présenter une propriété de lubrification permettant de lubrifier le roulement d'un pied de pale sur l'ensemble de la plage de températures auxquelles ledit roulement est soumis.

Selon un mode de réalisation, la graisse présente un point de goutte de 200°C à 350°C, en particulier de 220°C à 300°C, plus particulièrement de 240°C à 285°C tel que mesuré par la méthode NF T 60-627.

Selon la méthode NF T 60-627, le point de goutte correspond à la température à laquelle un échantillon de graisse chauffé commence à s'écouler à travers un orifice normalisé.

De façon avantageuse, le point de goutte de la graisse est supérieur à la température maximale de la plage de températures auxquelles le roulement d'un pied de pale est soumis. La graisse du lubrifiant selon l'invention ne se liquéfie donc pas dans cette plage de températures et ne va pas être facilement projetée vers l'extérieur du roulement d'un pied de pale dans lequel le lubrifiant est utilisé, mais au contraire, va permettre de lubrifier ledit roulement aux températures élevées auxquelles il peut être soumis.

Le grade NLGI, établi par le National Lubricating Grease Institute, est une classification largement utilisée pour les graisses. Il est mesuré par la méthode ASTM D217. Il permet de classer les graisses en neuf grades en fonction de leur consistance.

Une graisse présentant un grade NLGI supérieur à 0, en particulier de 1 à 5, plus particulièrement de 2 à 3 tel que mesuré par la méthode ASTM D217 convient particulièrement au lubrifiant selon l'invention. En effet, une graisse ayant un grade NLGI dans ces plages de valeurs présente le meilleur rapport entre la résistance aux contraintes subies et la génération de frottement des surfaces en contact dans le roulement d'un pied de pale, elle résiste donc mieux aux contraintes subies par le lubrifiant et limite le risque de projection dudit lubrifiant selon l'invention vers l'extérieur dudit roulement.

Selon un mode de réalisation, l'huile de base présente une viscosité cinématique à 40°C supérieure ou égale à 40 mm².s⁻¹, en particulier de 45 mm².s⁻¹ à 250 mm².s⁻¹, plus particulièrement de 50 mm².s⁻¹ à 220 mm².s⁻¹ telle que mesurée par la méthode NF T 60-100.

La viscosité cinématique correspond à la mesure de la résistance d'un fluide à l'écoulement. Comme la viscosité cinématique varie selon la température, elle est mesurée à 40 °C, conformément à la méthode NF T 60-100.

De façon avantageuse, une huile de base présentant une viscosité cinématique dans les plages ci-dessus permet au lubrifiant selon l'invention d'avoir une propriété de lubrification telle que des surfaces en contact dans le roulement d'un pied de pale ne frottent pas trop, ce qui favorise la durée de vie dudit roulement.

Le lubrifiant peut comprendre en outre le composé chimique à structure lamellaire du revêtement.

Comme expliqué ci-dessus, en lien avec le revêtement, le composé chimique à structure lamellaire présente une propriété de lubrification sur une large plage de température. De façon avantageuse, la combinaison entre le lubrifiant et le composé chimique à structure lamellaire permet au lubrifiant de présenter une propriété de lubrification sur l'ensemble de la plage de températures auxquelles le roulement d'un pied de pale est soumis.

Sans vouloir être lié par aucune théorie, les inventeurs pensent que le composé chimique à structure lamellaire compris dans le lubrifiant interagit avec le revêtement en composé chimique à structure lamellaire afin de le reformer dans le cas où ledit revêtement serait endommagé au cours de l'utilisation du roulement d'un pied de pale. De façon avantageuse, cette interaction augmente la durée de vie du revêtement.

Selon un mode de réalisation, la teneur en composé chimique à structure lamellaire dans le lubrifiant est de 1% à 10% en poids, en particulier de 2% à 7% en poids, plus particulièrement encore de 3% à 5% en poids par rapport au poids de la graisse.

Des teneurs en composé chimique à structure lamellaire hors des gammes ci-dessous peuvent déstabiliser le lubrifiant selon l'invention, c'est-à-dire lui faire perdre sa propriété de lubrification.

Afin d'améliorer la lubrification du roulement d'un pied de pale, le revêtement en composé chimique à structure lamellaire peut préférentiellement recouvrir les deux chemins de roulement. Afin de faciliter le dépôt du revêtement, ledit revêtement peut, plus préférentiellement encore, être déposé sur toute la surface intérieure de la bague extérieure et/ou sur toute la surface extérieure de la bague intérieure. La surface de contact des corps roulants peut également être recouverte du revêtement en composé chimique à structure lamellaire.

Selon un mode de réalisation, la surface du chemin de roulement recouverte par le revêtement est rugueuse.

Le revêtement en composé chimique à structure lamellaire épouse les formes de la rugosité de la surface sur laquelle il est appliqué. De façon avantageuse, la rugosité de la surface permet la formation d'anfractuosités de surface dans lesquelles le lubrifiant et des éventuelles particules d'usure du roulement d'un pied de pale ou dudit revêtement peuvent être piégés. Cette rugosité de surface permet la rétention du lubrifiant dans la zone de contact malgré les conditions oscillantes. Cette rugosité de surface diminue également le risque que les particules d'usure ne jouent un rôle de particules abrasives altérant le fonctionnement du roulement d'un pied de pale. La rugosité de surface augmente donc la durée de vie du roulement d'un pied de pale.

Selon un mode de réalisation, les caractéristiques métallurgiques d'une des surfaces d'un chemin de roulement recouvert par le revêtement peuvent être améliorées, en particulier les contraintes résiduelles peuvent être augmentées, augmentant ainsi la durée de vie du roulement d'un pied de pale.

Selon un mode de réalisation, le matériau de la bague extérieure et le matériau de la bague intérieure sont choisis parmi les nuances d'aciers à roulements, indépendamment l'un de l'autre, parmi 100Cr6, M50, M50NiL, 32CrMoV13 nitruré, 16NiCrMo13 cémenté, en particulier est M50NiL.

Selon un mode de réalisation, le matériau des corps roulants est choisi parmi M50, 100Cr6, Si3N4, en particulier est M50.

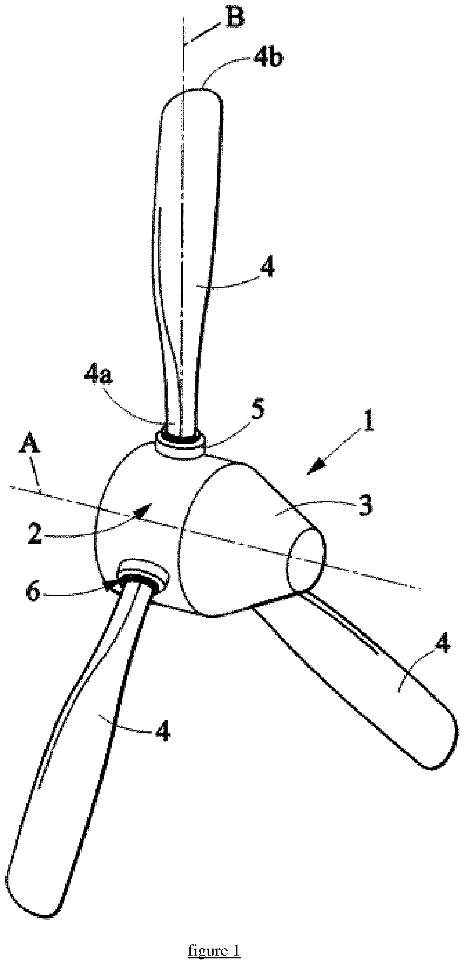

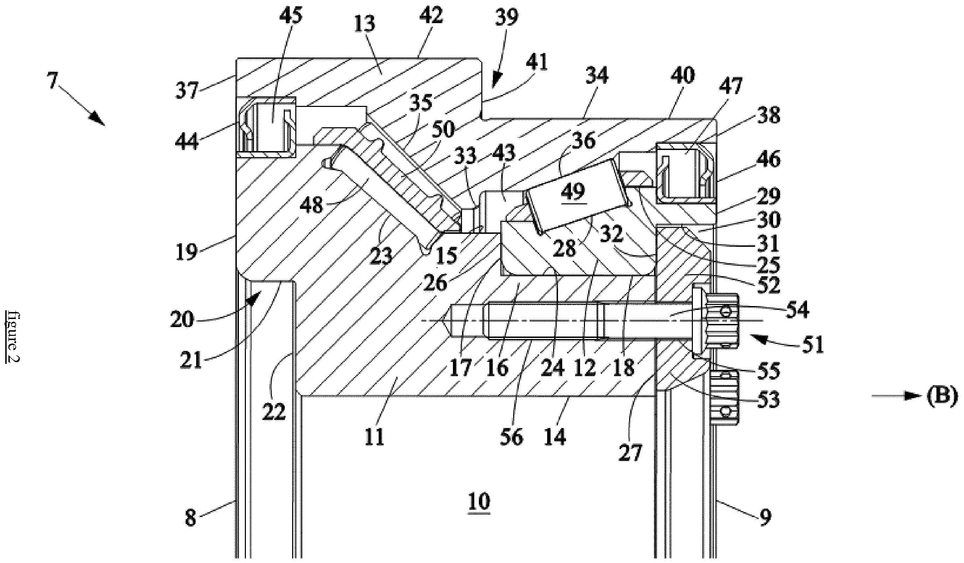

Un exposé détaillé de ce roulement d'un pied de pale particulier, assorti de référence aux figures 1 et 2, est présenté ci-après.

La figure 1 représente schématiquement en trois dimensions en perspective un exemple d'un système tournant 1 selon un exemple de mise en oeuvre de l'invention. Le système tournant 1 comprend un moyeu (non représenté) d'axe A autour duquel est monté rotatif un rotor 2. Le rotor 2 tourne par rapport au moyeu autour de l'axe A. Le rotor 2 comprend un corps principal 3, par exemple symétrique de révolution autour de l'axe A. Le rotor 2 comprend également une ou plusieurs pales 4 (dans l'exemple, trois pales 4), s'étendant chacune radialement par rapport au moyeu. Chaque pale 4 s'étend selon un axe longitudinal B. Une pale pouvant avoir une forme très complexe, il est difficile de définir très précisément l'axe longitudinal B, si ce n'est qu'il correspond à la direction principale de la pale 4. Aussi, quand on dit que la pale 4 s'étend « radialement », on n'implique pas nécessairement que l'axe B intersecte l'axe A ou s'étende dans un plan perpendiculaire à l'axe A, mais la direction générale de la pale 4 est radiale.

La pale 4 s'étend entre une extrémité, appelée pied de pale 4a, où elle est assemblée au corps principal 3, et une extrémité opposée 4b libre. La pale 4 est montée, au niveau de son pied 4a, dans un boîtier 5 solidaire du corps principal 3. La pale 4 est montée oscillante dans le boîtier 5 par l'intermédiaire d'un roulement (décrit en détail plus loin) monté entre le pied de pale 4a et le boîtier 5. Le roulement en question présente un axe de roulement, et l'oscillation de la pale 4 par rapport au boitier 5 est autorisée par rapport à cet axe. L'axe en question est clairement défini et s'étend sensiblement selon l'axe B. Pour fixer les idées, on peut considérer que l'axe B correspond à l'axe du roulement et, par la suite, on appellera B l'axe du roulement.

En fonctionnement, la pale 4 va tourner par rapport au boîtier 5 autour de l'axe B, mais a priori sur une course angulaire inférieure à 360°. Par contre, la pale 4 va osciller par rapport au boîtier 5 autour de l'axe B par des mouvements de va-et-vient contrôlés, selon les efforts transmis par la pale au fluide (air) environnant.

Le boîtier 5 est tout composant permettant cette mise en oeuvre.

Comme expliqué ci-dessus, le roulement est par conséquent excentré par rapport à l'axe A, et est par conséquent soumis à une forte centrifugation autour de cet axe A lors de la mise en oeuvre du système tournant 1.

La présente invention est applicable à d'autres roulements oscillants autour d'un axe radial et centrifugés autour d'un axe axial.

Dans ce qui suit, le terme « axial » fait référence à l'axe B de ce roulement 7, parallèle à la direction (B) représentée. Le terme « proximal » fait référence à la proximité d'un composant à l'axe A, alors que le terme « distal » fait référence à l'éloignement d'un composant de l'axe A.

Le roulement 7 comprend donc un côté proximal 8 et un côté distal 9, opposé au côté proximal 8.

Le roulement 7 définit un alésage intérieur 10 dans lequel le pied de pale 4 est destiné à être monté.

Dans ce qui suit, le terme « intérieur » est utilisé pour désigner la proximité à l'axe B, alors que le terme « extérieur » est utilisé pour désigner l'éloignement de l'axe B.

Le roulement 7 comprend une première bague intérieure 11, une deuxième bague intérieure 12, et une bague extérieure 13 unique. Les bagues intérieures 11 et 12 sont appelées ainsi car elles comportent chacune un chemin de roulement intérieur pour des corps roulants, et la bague extérieure 13 est appelée ainsi car elle comporte des chemins de roulement extérieurs pour des corps roulants, comme ce sera expliqué plus en détail par la suite.

La première bague intérieure 11 comprend une surface intérieure 14 et une surface extérieure 15 opposée à la surface intérieure 14. La surface intérieure 14 est utilisée pour le montage du roulement 7 sur le pied de pale. La surface intérieure 14 présente un diamètre minimal d_{arbre}. La première bague intérieure 11 s'étend axialement depuis le côté proximal 8 en direction du côté distal 9, sur une grande majorité de la longueur axiale du roulement 7.

Dans la moitié distale du roulement 7, la surface extérieure 15 définit un siège distal 16 pour la réception de la deuxième bague intérieure 12. Le siège distal 16 comprend une surface de butée axiale 17 faisant face au côté distal 9, et une surface cylindrique de réception 18 orientée vers l'extérieur, et s'étendant depuis la surface de butée axiale 17.

Dans la moitié proximale du roulement 7, la surface extérieure 15 définit un premier chemin de roulement 23 proximal.

La première bague intérieure 11 comporte une surface d'extrémité proximale 19. La surface intérieure 14 de la première bague intérieure 11 comprend un épaulement 20 d'assemblage à un pied de pale. L'épaulement 20 comprend une surface cylindrique 21 s'étendant depuis la surface d'extrémité proximale 19 en direction de l'extrémité distale, une surface de butée axiale 22 faisant face au côté proximal 8, et s'étendant depuis la surface cylindrique 21 jusqu'à l'alésage 10.

La première bague intérieure 11 comporte une surface d'extrémité distale 27, opposée à la surface de butée axiale 22 et faisant face au côté distal 9.

La deuxième bague intérieure 12 comprend une surface intérieure 24 et une surface extérieure 25 opposée à la surface intérieure 24. La surface intérieure 24 est utilisée pour le montage de la deuxième bague intérieure 12 dans le siège 16 de la première bague intérieure par emmanchement. La surface intérieure 24 fait donc face, en étant complémentaire, à la surface cylindrique de réception 18. La deuxième bague intérieure 12 s'étend axialement depuis une première surface de butée axiale 26 faisant face au côté proximal 8 en direction du côté distal 9, sur environ une moitié distale de la longueur axiale du roulement 7.

La surface extérieure 25 définit un deuxième chemin de roulement 28 distal.

La deuxième bague intérieure 12 comporte une surface d'extrémité distale 29. La surface intérieure 24 de la deuxième bague intérieure 11 comprend un épaulement 30 de pré-chargement. L'épaulement 30 comprend une surface cylindrique 31 s'étendant depuis la surface d'extrémité distale 29 en direction de l'extrémité proximale, une surface de butée axiale 32 faisant face au côté distal 9, et s'étendant depuis la surface cylindrique 31 jusqu'à la surface cylindrique de réception 18.

La bague extérieure 13 comprend une surface intérieure 33 et une surface extérieure 34 opposée à la surface intérieure 33. La surface extérieure 34 est utilisée pour le montage du roulement 7 sur le boîtier. La bague extérieure 13 s'étend axialement depuis le côté proximal 8 jusqu'au côté distal 9, sur la totalité de la longueur axiale du roulement 7.

Dans la moitié proximale du roulement 7, la surface intérieure 33 définit un deuxième chemin de roulement 35 proximal. Dans la moitié distale du roulement 7, la surface intérieure 33 définit un deuxième chemin de roulement 36 distal.

La bague extérieure 13 comporte une surface d'extrémité proximale 37 et une surface d'extrémité distale 38 oppose. La surface extérieure 34 comprend un épaulement 39 d'assemblage au boîtier. L'épaulement 39 comprend une surface cylindrique 40 s'étendant depuis la surface d'extrémité distale 38 en direction de l'extrémité proximale, une surface de butée axiale 41 faisant face au côté distal 9, et s'étendant depuis la surface cylindrique 40 jusqu'à une deuxième surface cylindrique 42. La deuxième surface cylindrique 42 s'étend depuis la surface de butée axiale 41 jusqu'à la surface d'extrémité proximale 37.

Un espace intérieur unique 43 est défini entre la surface intérieure 33 de la bague extérieure 13 et la surface extérieure 15, 25 des première et deuxième bagues intérieures 11, 12, l'espace intérieur unique 43 s'étendant entre une extrémité proximale 44 où il est fermé par un système d'étanchéité proximal 45 entre la bague extérieure 13 et la première bague intérieure 11 et une extrémité distale 46 où il est fermé par un système d'étanchéité distal 47 entre la bague extérieure 13 et la deuxième bague intérieure 12.

Au niveau de l'espace intérieur unique 43, les premiers chemins de roulement extérieur et intérieur proximaux 23, 35 se font face, et les deuxièmes chemins de roulement extérieur et intérieur distaux 28, 36 se font face.

Une première rangée proximale de corps roulants 48 présentant une surface de contact est montée dans l'espace intérieur unique, roulants sur les premiers chemins de roulement extérieur et intérieur proximaux 23, 35. Une deuxième rangée distale de corps roulants 49 présentant une surface de contact est montée dans l'espace intérieur unique, roulants sur les deuxièmes chemins de roulement extérieur et intérieur distaux 28, 36. Les première et deuxième rangées de corps roulants 48, 49 sont espacées l'une de l'autre selon l'axe longitudinal B.

Les corps roulants d'une même rangée sont le cas échéant espacés les uns des autres par une cage 50, comme représentée sur la figure 2 pour la rangée proximale.

Le roulement 7, comprend un système de chargement 51 adapté pour maintenir la deuxième bague intérieure 12 axialement en butée contre la première bague intérieure 11.

Le système de chargement 51 comprend une plaque annulaire 52 présentant une surface d'appui 53 en contact avec la deuxième bague intérieure 12 et sollicitant la deuxième bague intérieure 12 dans le sens axial, la plaque annulaire 52 étant maintenue solidaire de la première bague intérieure 11 par vissage à l'aide de vis 54. Plus précisément, la plaque 52 est vissée sur la bague intérieure 51 par des vis traversant des alésages 55 de la plaque 52 et des alésages 56 de la première bague intérieure 11 mis en correspondance avec les alésages 55. La surface d'appui 53 appuie sur la surface de butée axiale 32, sollicitant ainsi la deuxième bague intérieure 12 en direction du côté proximal, ces efforts de serrage se retrouvant au niveau du contact entre la surface de butée axiale 17 de la première bague intérieure 11 et la surface de butée axiale 26 de la deuxième bague intérieure 12. Les vis sont serrées jusqu'à appliquer une force de chargement Fprécharge.

L'épaulement 39 d'assemblage au boîtier, en particulier la surface de butée axiale 41 de celui-ci, prévu sur la surface extérieure 34 de la bague extérieure 13 unique, est disposé axialement (selon la direction (B)) entre les premières et deuxième rangées de corps roulants, c'est-à-dire sensiblement au milieu, axialement, de la longueur du roulement 7.

L'épaulement 20 d'assemblage au pied de pale, prévu sur la surface intérieure 14 de la première bague intérieure 12 est disposé plus proximal que la première rangée proximale 48 de corps roulants.

Ainsi, les efforts axiaux subis par le roulement sont essentiellement pris en charge par la première rangée proximale 48 de corps roulants.

Dans l'exemple ci-dessus, les corps roulants des deux rangées de corps roulants présentent le même type de géométrie.

A la place des rouleaux, on pourrait utiliser d'autres types de corps roulants, par exemple des billes.

Afin d'améliorer la lubrification du roulement d'un pied de pale 7 décrit ci-dessus, le revêtement en composé chimique à structure lamellaire peut recouvrir au moins deux chemins de roulement, de préférence au moins trois chemins de roulement, plus préférentiellement encore tous les chemins de roulement. Afin de faciliter le dépôt du revêtement, ledit revêtement peut, plus préférentiellement encore, être déposé sur l'ensemble de la surface intérieure de la bague extérieure unique, sur l'ensemble de la surface extérieure de la première bague intérieure et/ou sur l'ensemble de la surface extérieure de la deuxième bague extérieure. La surface de contact des corps roulants de la première rangée proximale et/ou la surface de contact de la deuxième rangée distale peuvent également être recouverte du revêtement en composé chimique à structure lamellaire.

Selon un second aspect, la présente invention concerne l'utilisation d'une composition lubrifiante comprenant un lubrifiant et un composé chimique à structure lamellaire pour lubrifier un roulement d'un pied de pale selon le premier aspect.

Le lubrifiant et le composé chimique à structure lamellaire sont tels que décrits ci-dessus dans la partie consacrée à la composition lubrifiante.

Comme expliqué ci-dessus dans la partie consacrée à la composition lubrifiante, la combinaison entre le lubrifiant et le composé chimique à structure lamellaire permet à la composition lubrifiante de présenter une propriété de lubrification quelles que soient la contrainte et les températures à laquelle un roulement d'un pied de pale est soumis. Cette composition lubrifiante peut donc être utilisée pour lubrifier un roulement d'un pied de pale.

Sans vouloir être lié par aucune théorie, les inventeurs pensent que le composé chimique à structure lamellaire compris dans la composition lubrifiante interagit avec le revêtement en composé chimique à structure lamellaire afin de le reformer dans le cas où ledit revêtement serait endommagé au cours de l'utilisation du roulement d'un pied de pale. De façon avantageuse, cette interaction augmente la durée de vie du revêtement.

Tout particulièrement, la composition lubrifiante peut être utilisée pour lubrifier les corps roulants par rapport au chemin de roulement du roulement de pied de pale.

L'invention concerne également un procédé de fabrication du roulement d'un pied de pale décrit ci-dessus, caractérisé en ce qu'il comprend les étapes suivantes :
a) dépôt d'un revêtement en composé chimique à structure lamellaire sur un des chemins de roulement et/ou sur la surface de contact des corps roulants, et
b) application d'un lubrifiant dans l'espace intérieur unique.

Le revêtement en composé chimique à structure lamellaire et le lubrifiant de ce roulement d'un pied de pale particulier sont tels que décrits dans la partie consacrée au roulement.

Le revêtement en composé chimique à structure lamellaire peut être déposé par toutes techniques de dépôt sur une surface connues de l'homme du métier. En particulier le revêtement peut être déposé par propulsion dans un gaz conditionné du composé chimique à structure lamellaire sur la surface à revêtir. Une telle technique est très avantageuse car elle permet un dépôt à froid, à haute vitesse, sans apport de chaleur ni polymérisation. Elle est donc économique et rapide.

Le lubrifiant est appliqué dans l'espace intérieur unique du roulement par toutes techniques de dépôt de lubrifiant connues de l'homme du métier. Le lubrifiant peut être appliqué manuellement, par une pompe à graisse ou par un graisseur automatique. En particulier, le lubrifiant peut être appliqué sur le revêtement en composé chimique à structure lamellaire déposé sur un des chemins de roulement et/ou sur la surface de contact des corps roulants.

Selon un mode de réalisation, le procédé peut comprendre en outre une étape préliminaire de traitement de la surface présentant le chemin de roulement sur lequel le revêtement est déposé lors de l'étape a).

Cette étape préliminaire de traitement de la surface augmente la rugosité de ladite surface. Elle peut être réalisée par toutes techniques connues de l'homme du métier permettant d'augmenter la rugosité d'une surface. En particulier cette étape préliminaire est réalisée par grenaillage. De façon avantageuse, le grenaillage améliore également les caractéristiques métallurgiques, en particulier par l'augmentation des contraintes résiduelles, de la surface traitée, améliorant ainsi la durée de vie du roulement d'un pied de pale.

Selon un mode de réalisation, le procédé peut comprendre, une étape de tribofinition afin de régler la rugosité obtenue lors de l'étape préliminaire de traitement de surface.

### Exemples

### Exemple 1 : Test tribologique d'un surface recouverte d'un revêtement en composé chimique à structure lamellaire.

La surface, S1, d'une plaque (en M50NiL) est soumise à un test tribologique à l'aide d'une bille (en M50) selon les paramètres du tableau 1 suivant.

Pour étudier l'impact du revêtement en WS₂, la surface, S2, d'une plaque (en M50NiL) recouverte d'un revêtement en WS₂ est soumise au même test.

Après les tests, l'état des surfaces S1 et S2 est analysé.

**Tableau 1 : Paramètre du test tribologique**

| Paramètres | Valeur |
|---|---|
| Pression de contact maximale | 3.5 GPa |
| Distance d'oscillation de la plaque | 1,5 mm |
| Fréquence de rotation de la bille | 10Hz |
| Durée | 2h |
| Température | Ambiante : 20°C |
| Lubrifiant | Épaississant : complexe de lithium |
| | Huile de base : polyalphaoléfine |
| | Point de goutte : > à 300°C |

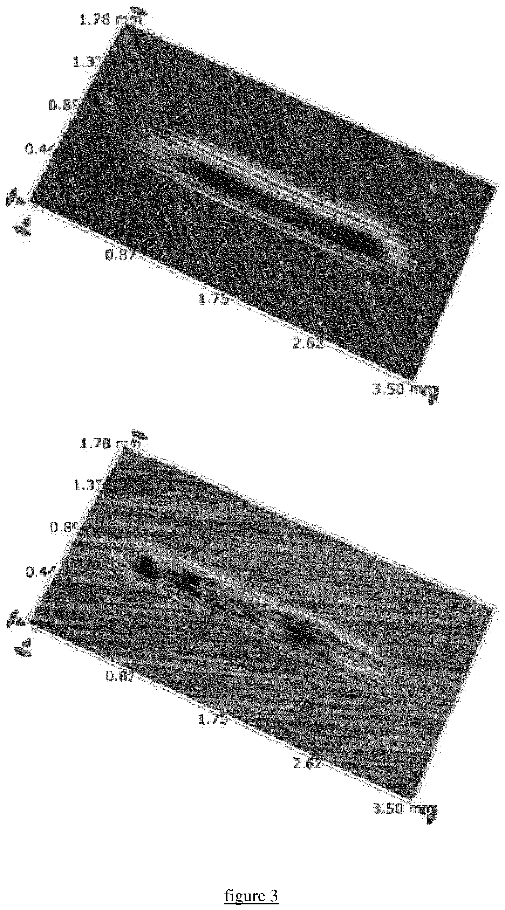

Comme illustré sur la figure 3, la trace d'usure sur la surface S1 est plus étendue et plus profonde que celle sur la surface S2. Le revêtement en WS₂ permet donc de mieux lubrifier la zone de contact entre la surface et la bille. Le revêtement en WS₂ permet donc d'allonger la durée de vie d'un roulement d'un pied de pale.

### Exemple 2 : Test tribologique d'un surface traitée par grenaillage recouverte d'un revêtement en composé chimique à structure lamellaire.

La surface, S3, d'une plaque (en M50NiL) traitée par grenaillage puis recouverte d'un revêtement en WS₂, est soumise à un test tribologique à l'aide d'une bille (en M50) selon les paramètres du tableau 1 précédent.

Après le test, l'état des surfaces S3 et S2 est analysé.

La trace d'usure sur la surface S3 est moins étendue et moins profonde que celle sur la surface S2 de l'Exemple 1. Le traitement par grenaillage combiné au revêtement en WS₂, permet donc de mieux lubrifier la zone de contact entre la surface et la bille que le revêtement en WS₂ seul. Cette combinaison permet donc d'allonger la durée de vie d'un roulement d'un pied de pale.

## Revendications

1. Roulement d'un pied de pale (7) s'étendant selon une direction longitudinale entre une extrémité proximale et une extrémité distale,
le roulement d'un pied de pale (7) comprenant
- une bague extérieure (13) présentant une surface intérieure (33) et une surface extérieure (34) opposée à la surface intérieure (33), la surface intérieure (33) de la bague extérieure (13) présentant un chemin de roulement extérieur,
- une bague intérieure (11, 12) présentant une surface intérieure (14, 24) et une surface extérieure (15, 25) opposée à la surface intérieure (14, 24), la surface extérieure (15, 25) de la bague intérieure (11, 12) présentant un chemin de roulement intérieur,
- un espace intérieur unique (43) étant défini entre la surface intérieure (33) de la bague extérieure (13) et la surface extérieure (15, 25) de la bague intérieure (11, 12), l'espace intérieur unique (43) s'étendant entre une extrémité proximale (44) où il est fermé par un système d'étanchéité proximal (45) entre la bague extérieure (13) et la bague intérieure (11, 12) et une extrémité distale (46) où il est fermé par un système d'étanchéité distal (47) entre la bague extérieure (13) et la bague intérieure (11, 12), ledit espace intérieur unique (43) renfermant un lubrifiant,
- une rangée de corps roulants (billes ou rouleaux) (48, 49) présentant une surface de contact montée dans l'espace intérieur unique (43), roulants sur les chemins de roulement extérieur et intérieur,
et **caractérisé en ce qu'**au moins un des chemins de roulement et/ou la surface de contact des corps roulants est (sont) recouvert(s) d'un revêtement en composé chimique à structure lamellaire.

2. Roulement d'un pied de pale (7) selon la revendication 1, dans lequel le composé chimique à structure lamellaire est choisi parmi les carbures de fluor, le graphite, MoS₂, WS₂ WSe₂, NB, ZnO, ZnS et SnS de préférence choisi parmi le graphite, MoS₂ et WS₂, plus préférentiellement encore le composé chimique à structure lamellaire est WS₂.

3. Roulement d'un pied de pale (7) selon l'un quelconque des revendications 1 à 2 dans lequel le lubrifiant est une graisse comprenant une huile de base et un épaississant,
l'huile de base étant choisie parmi un mélange ester-perfluoropolyéther, des polyalphaoléfines, un mélange ester-polyalphaoléfines et un composé synthétique, et
l'épaississant étant choisi parmi la polyurée, un savon métallique complexe de lithium et un savon métallique complexe de sodium.

4. Roulement d'un pied de pale (7) selon l'un quelconque des revendications 1 à 3, dans lequel la graisse présente une plage de températures de fonctionnement ayant une limite inférieure de température de -70°C à -20°C, en particulier de -60°C à -30°C, plus particulièrement de - 55°C à -40°C, et
une limite de performance de température supérieure ou égale à 170°C, en particulier de 170°C à 210°C, plus particulièrement de 175°C à 200°C.

5. Roulement d'un pied de pale (7) selon l'un quelconque des revendications 1 à 4, dans lequel le lubrifiant comprend en outre le composé chimique à structure lamellaire du revêtement.

6. Roulement d'un pied de pale (7) selon la revendication 5, dans lequel la teneur en composé chimique à structure lamellaire est de 1% à 10% en poids, en particulier de 2% à 7% en poids, plus particulièrement encore de 3% à 5% en poids par rapport au poids de la graisse.

7. Roulement d'un pied de pale (7) selon l'un quelconque des revendications 1 à 6, dans lequel la surface présentant le chemin de roulement recouvert par le revêtement est rugueuse.

8. Roulement d'un pied de pale (7) selon l'un quelconque des revendications 1 à 7 dans lequel le matériau de la bague extérieure (13) et le matériau de la bague intérieure (11, 12) sont choisis, indépendamment l'un de l'autre, parmi 100Cr6, M50, M50NiL, 32CrMoV13 nitruré, 16NiCrMo13 cémenté, en particulier est M50NiL.

9. Roulement d'un pied de pale (7) selon l'un quelconque des revendications 1 à 8, dans lequel le matériau des corps roulants est choisi parmi M50, 100Cr6, Si3N4, en particulier est M50.

10. Utilisation d'une composition lubrifiante comprenant un lubrifiant et un composé chimique à structure lamellaire pour lubrifier un roulement d'un pied de pale (7), tel que défini dans l'un quelconque des revendications 1 à 9.

11. Utilisation selon la revendication 10 pour lubrifier les corps roulants par rapport au chemin de roulement de pied de pale (7).

12. Procédé de fabrication d'un roulement d'un pied de pale (7) tel que défini dans l'un quelconque des revendications 1 à 9, **caractérisé en ce qu'**il comprend les étapes suivantes :
a) dépôt d'un revêtement en composé chimique à structure lamellaire sur au moins un des chemins de roulement et/ou sur la surface de contact des corps roulants, et
b) application d'un lubrifiant dans l'espace intérieur unique (43).

13. Procédé selon la revendication 12, comprenant en outre une étape préliminaire de traitement de la surface présentant le chemin de roulement sur lequel le revêtement est déposé lors de l'étape a).

## Patentansprüche

1. Lager einer Blattwurzel (7), das sich entlang einer Längsrichtung zwischen einem proximalen Ende und einem distalen Ende erstreckt,
das Lager einer Blattwurzel (7) umfassend:
- einen Außenring (13), der eine Innenoberfläche (33) und eine Außenoberfläche (34) gegenüber der Innenoberfläche (33) aufweist, wobei die Innenoberfläche (33) des Außenrings (13) eine äußere Laufbahn aufweist,
- einen Innenring (11, 12), der eine Innenoberfläche (14, 24) und eine Außenoberfläche (15, 25) gegenüber der Innenoberfläche (14, 24) aufweist, wobei die Außenoberfläche (15, 25) des Innenrings (11, 12) eine innere Laufbahn aufweist,
- einen einzigen Innenraum (43), der zwischen der Innenoberfläche (33) des Außenrings (13) und der Außenoberfläche (15, 25) des Innenrings (11, 12) definiert ist, wobei sich der einzelne Innenraum (43) zwischen einem proximalen Ende (44), an dem er durch ein proximales Dichtungssystem (45) zwischen dem Außenring (13) und dem Innenring (11, 12) geschlossen ist, und einem distalen Ende (46), an dem er durch ein distales Dichtungssystem (47) zwischen dem Außenring (13) und dem Innenring (11, 12) geschlossen ist, erstreckt, wobei der einzige Innenraum (43) ein Schmiermittel umschließt,
- eine Reihe von Wälzkörpern (Kügelchen oder Walzen) (48, 49), die eine Kontaktoberfläche aufweisen, die in dem einzigen Innenraum (43) montiert ist, die auf der äußeren und der inneren Laufbahn rollen,
und **dadurch gekennzeichnet, dass** mindestens eine der Laufbahnen und/oder die Kontaktoberfläche der Wälzkörper mit einer Beschichtung aus einer chemischen Verbindung mit Lamellenstruktur bedeckt ist/sind.

2. Lager einer Blattwurzel (7) nach Anspruch 1, wobei die chemische Verbindung mit Lamellenstruktur aus Fluorcarbiden, Graphit, MoS₂, WS₂ WSe₂, NB, ZnO, ZnS und SnS ausgewählt ist, vorzugsweise aus Graphit, MoS₂ und WS₂ ausgewählt ist, stärker bevorzugt wobei die chemische Verbindung mit Lamellenstruktur WS₂ ist.

3. Lager einer Blattwurzel (7) nach einem der Ansprüche 1 bis 2, wobei das Schmiermittel ein Fett ist, umfassend ein Basisöl und ein Verdickungsmittel,
wobei das Basisöl aus einem Esterperfluorpolyethergemisch, Polyalphaolefinen, einem Esterpolyalphaolefingemisch und einer synthetischen Verbindung ausgewählt ist, und wobei das Verdickungsmittel aus Polyharnstoff, einer Lithiumkomplexmetallseife und einer Natriumkomplexmetallseife ausgewählt ist.

4. Lager (7) nach einem der Ansprüche 1 bis 3, wobei das Fett einen Betriebstemperaturbereich aufweist, der eine untere Temperaturgrenze von -70 °C bis -20 °C, insbesondere von -60 °C bis -30 °C, noch mehr bevorzugt von -55 °C bis -40 °C besitzt, und
eine Temperaturleistungsgrenze von größer oder gleich 170 °C, insbesondere von 170 °C bis 210 °C, noch mehr bevorzugt von 175 °C bis 200 °C.

5. Lager einer Blattwurzel (7) nach einem der Ansprüche 1 bis 4, wobei das Schmiermittel ferner die chemische Verbindung mit Lamellenstruktur der Beschichtung umfasst.

6. Lager einer Blattwurzel (7) nach Anspruch 5, wobei der Gehalt an chemischer Verbindung mit Lamellenstruktur 1 Gew.-% bis 10 Gew.- %, insbesondere 2 Gew.- % bis 7 Gew.- %, noch mehr bevorzugt 3 Gew.- % bis 5 Gew.- % bezogen auf das Gewicht des Fetts beträgt.

7. Lager einer Blattwurzel (7) nach einem der Ansprüche 1 bis 6, wobei die Oberfläche, die die Laufbahn aufweist, die durch die Beschichtung bedeckt ist, rau ist.

8. Lager einer Blattwurzel (7) nach einem der Ansprüche 1 bis 7, wobei das Material des Außenrings (13) und das Material des Innenrings (11, 12) unabhängig voneinander aus 100Cr6, M50, M50NiL, nitriertem 32CrMoV13, einsatzgehärtetem 16NiCrMo13 ausgewählt sind, insbesondere M50NiL ist.

9. Lager einer Blattwurzel (7) nach einem der Ansprüche 1 bis 8, wobei das Material der Wälzkörper aus M50, 100Cr6, Si3N4 ausgewählt ist, insbesondere M50 ist.

10. Verwendung einer Schmierzusammensetzung, umfassend ein Schmiermittel und eine chemische Verbindung mit Lamellenstruktur, um ein Lager einer Blattwurzel (7) nach einem der Ansprüche 1 bis 9 zu schmieren.

11. Verwendung nach Anspruch 10 zum Schmieren der Wälzkörper relativ zu der Laufbahn der Blattwurzel (7).

12. Verfahren zum Herstellen eines Lagers einer Blattwurzel (7) nach einem der Ansprüche 1 bis 9, **dadurch gekennzeichnet, dass** es die folgenden Schritte umfasst:
a) Abscheiden einer Beschichtung aus der chemischen Verbindung mit Lamellenstruktur auf mindestens eine der Laufbahnen und/oder die Kontaktoberfläche der Wälzkörper, und
b) Anbringen eines Schmiermittels in den einzigen Innenraum (43).

13. Verfahren nach Anspruch 12, umfassend ferner einen vorbereitenden Schritt eines Behandelns der Oberfläche, die die Laufbahn aufweist, auf die die Beschichtung bei dem Schritt a) abgeschieden wird.

## Claims

1. A rolling bearing for a blade root (7) extending in a longitudinal direction between a proximal end and a distal end,
the rolling bearing for a blade root (7) comprising
- an outer ring (13) having an inner surface (33) and an outer surface (34) opposite the inner surface (33), the inner surface (33) of the outer ring (13) having an outer raceway,
- an inner ring (11, 12) having an inner surface (14, 24) and an outer surface (15, 25) opposite the inner surface (14, 24), the outer surface (15, 25) of the inner ring (11, 12) having an inner raceway,
- a single inner space (43) being defined between the inner surface (33) of the outer ring (13) and the outer surface (15, 25) of the inner ring (11, 12), the single inner space (43) extending between a proximal end (44) where it is closed by a proximal sealing system (45) between the outer ring (13) and the inner ring (11, 12) and a distal end (46) where it is closed by a distal sealing system (47) between the outer ring (13) and the inner ring (11, 12), said single inner space (43) enclosing a lubricant,
- a row of rolling elements (balls or rollers) (48, 49) having a contact surface mounted in the single inner space (43), rolling on the outer and inner raceways,
and **characterized in that** at least one of the raceways and/or the contact surface of the rolling elements is (are) covered with a coating made of a chemical compound having a lamellar structure.

2. The rolling bearing for a blade root (7) according to claim 1, wherein the chemical compound having a lamellar structure is selected from fluorine carbides, graphite, MoS₂, WS₂, WSe₂, NB, ZnO, ZnS and SnS preferably selected from graphite, MoS₂ and WS₂, even more preferably the chemical compound having a lamellar structure is WS₂.

3. The rolling bearing for a blade root (7) according to any of claims 1 to 2 wherein the lubricant is a grease comprising a base oil and a thickener,
the base oil is selected from an ester-perfluoropolyether mixture, polyalphaolefins, an ester-polyalphaolefin mixture and a synthetic compound, and the thickener is selected from polyurea, a metallic lithium complex soap and a metallic sodium complex soap.

4. The rolling bearing for a blade root (7) according to any one of claims 1 to 3, wherein the grease has an operating temperature range having a lower temperature bound from -70°C to -20°C, in particular from -60°C to -30°C, more particularly from -55°C to -40°C, and
an upper temperature performance bound greater than or equal to 170°C, in particular from 170°C to 210°C, more particularly from 175°C to 200°C.

5. The rolling bearing for a blade root (7) according to any of claims 1 to 4, wherein the lubricant further comprises the chemical compound having a lamellar structure of the coating.

6. The rolling bearing for a blade root (7) according to claim 5, wherein the content of the chemical compound having a lamellar structure is from 1% to 10% by weight, in particular from 2% to 7% by weight, more particularly still from 3% to 5% by weight relative to the weight of the grease.

7. The rolling bearing for a blade root (7) according to any of claims 1 to 6, wherein the surface having the raceway covered by the coating is rough.

8. The rolling bearing for a blade root (7) according to any of claims 1 to 7 wherein the material of the outer ring (13) and the material of the inner ring (11, 12) are chosen, independently of each other, from 100Cr6, M50, M50NiL, nitrided 32CrMoV13, 16NiCrMo13, in particular is M50NiL.

9. The rolling bearing for a blade root (7) according to any of claims 1 to 8, wherein the material of the rolling elements is chosen from M50, 100Cr6, Si3N4, in particular is M50.

10. A use of a lubricant composition comprising a lubricant and a chemical compound having a lamellar structure to lubricate a rolling bearing for a blade root (7), as defined in any one of claims 1 to 9.

11. The use according to claim 10 to lubricate the rolling elements relative to the blade root raceway (7).

12. A method for manufacturing a rolling bearing for a blade root (7) as defined in any one of claims 1 to 9, **characterized in that** it comprises the following steps:
a) depositing a coating made of a chemical compound having a lamellar structure on at least one of the raceways and/or on the contact surface of the rolling elements, and
b) applying a lubricant in the single inner space (43).

13. The method according to claim 12, further comprising a preliminary step of treating the surface having the raceway on which the coating is deposited during step a).
